# EUROPÄISCHE PATENTSCHRIFT

(11) **EP 1 721 316 B1**
(45) Veröffentlichungstag und Bekanntmachung des Hinweises auf die Patenterteilung: **31.12.2008**
(21) Anmeldenummer: 04763797.0
(22) Anmeldetag: 04.08.2004
(51) Int. Cl.: G11B 7/24

(54) **OPTISCHER DATENSPEICHER MIT MEHREREN SPEICHERSCHICHTEN**
OPTICAL DATA STORE WITH SEVERAL STORAGE LAYERS
MEMOIRE DE DONNEES OPTIQUE, PRESENTANT PLUSIEURS COUCHES DE MEMOIRE

(30) Priorität: 18.12.2003 DE 10360274
(43) Veröffentlichungstag der Anmeldung: 15.11.2006
(73) Patentinhaber: tesa AG, 20253 Hamburg (DE)
(72) Erfinder: KRESSE, Tobias, 20357 Hamburg (DE); JÜRGENS, Christoph, 20251 Hamburg (DE); SCHULTE-WIEKING, Kay, 69115 Heidelberg (DE)
(74) Vertreter: UEXKÜLL & STOLBERG
(86) Internationale Anmeldenummer: PCT/EP2004/008749
(87) Internationale Veröffentlichungsnummer: WO 2005/059908

(56) Entgegenhaltungen:
- DE-A1- 19 932 902
- BABA K. ET AL: "Write-once optical data storage media with large reflectance change with metal-island films" APPLIED OPTICS, Bd. 36, Nr. 11, 1997, Seiten 2421-2426, XP002316932 in der Anmeldung erwähnt

## Beschreibung

Die Erfindung betrifft einen optischen Datenspeicher, ein Verfahren zum Beschreiben eines derartigen optischen Datenspeichers sowie ein Verfahren zum Auslesen von Information aus einem derartigen optischen Datenspeicher.

In der WO 00/17864 A1 ist ein Datenspeicher mit einem optischen Informationsträger beschrieben, der eine als, Speicherschicht eingerichtete Polymerfolie enthält. Die Polymerfolie besteht z.B. aus biaxial orientiertem Polypropylen. Bei dem vorbekannten Datenspeicher ist die Polymerfolie in mehreren Lagen spiralartig auf einen Wickelkern aufgewickelt, wobei sich zwischen benachbarten Lagen jeweils eine Adhäsionsschicht befindet. In den Datenspeicher lassen sich Informationen einschreiben, indem die Polymerfolie mit Hilfe eines Schreibstrahls eines Schreiblasers eines Datenlaufwerks lokal erwärmt wird, wodurch sich die Brechzahl, Dichte und/oder Morphologie der Polymerfolie und das Reflexionsvermögen an der Grenzfläche der Polymerfolie lokal ändern. Dieser Effekt kann durch einen Farbstoff, der den Adhäsionsschichten (oder zusätzlichen Absorptionsschichten, siehe z.B. WO 02/103689 A1) beigegeben ist, verstärkt werden; dieser Absorberfarbstoff absorbiert den Schreibstrahl zumindest teilweise und gibt die dabei erzeugte Wärme lokal an die Polymerfolie ab. Mit Hilfe eines Lesestrahls in dem Laufwerk können die Veränderungen der Polymerfolie erfasst werden, da der Lesestrahl je nach eingeschriebener Information lokal mehr oder weniger stark an der Grenzfläche der Polymerfolie reflektiert wird. Durch Fokussieren des Schreibstrahls oder Lesestrahls lässt sich Information gezielt in eine vorgewählte Lage des Informationsträgers einschreiben bzw. daraus auslesen.

Beschreibbare mehrlagige optische Datenspeicher stellen eine Herausforderung dar, wenn es darum geht, in allen Lagen schnelle Schreib- und Zugriffszeiten zu gewährleisten.

Für schnelle Schreibzeiten ist eine hohe Absorption der zu beschreibenden Lage sowie eine hohe in der entsprechenden Lage zur Verfügung stehende Laserintensität erforderlich. Für einen sicheren Schreib- und Leseprozess ist zusätzlich eine hohe Reflexion (Verspiegelung) der entsprechenden Lage notwendig. Dies schließt sich jedoch gegenseitig aus, da eine hohe Verspiegelung und hohe Absorption der oberen Lagen die Laserintensität in den unteren Lagen abschwächt.

Beim Leseprozess, der darauf beruht, das Reflexionssignal der entsprechenden Lage zu betrachten, ist der Einfluss der oberen Lagen auf das Lesesignal doppelt so stark, da das Laserlicht die oberen Lagen auf dem Hin- und Rückweg passieren muss.

Optische Datenspeicher sind auch aus der CD- und der DVD-Technik bekannt. DVDs existieren zur Zeit in einlagig beschreibbarer und zweilagig lesbarer Form. Die Zweilagigkeit ist jedoch im Hinblick auf Abschwächung des Schreib- bzw. Lesestrahls noch unproblematisch. Als nächstes optisches Speichermedium der Zukunft ist die Blu-ray Disc zu nennen.

Über 2-Photonen-Anregung ist es gelungen, einen optischen Datenspeicher zu entwickeln, der einer 10-lagigen CD entspricht (Call/Recall, Inc., San Diego/Irvine, Kalifornien, USA).

Dass dünne Metallfilme elektromagnetische Wellen absorbieren können, ist bekannt. Näherungsweise ist es auch schon gelungen, die optischen Eigenschaften dünner Metallfilme zu berechnen (u.a. Y. Yagil, M. Yosefin, D.J. Bergmann and G. Deutscher, Scaling theory for the optical properties of a semicontinuous metal film, Phys. Rev. B 43, no.13 (1991)).

Weitere Veröffentlichungen haben dünne Metallschichten (insbesondere Silber, Aluminium, Kupfer und Gold) als Absorberschicht für optische Speichermedien vorgeschlagen (u.a. K. Baba et al., Write-once optical data storage media with large reflectance change with metal-island films, Applied Optics, Vol. 36, no. 11, Seiten 2421-2426 (1997)).

In der DE 101 28 901 A1 ist ein Verfahren beschrieben, welches in einem mehrlagigen optischen Datenspeicher, bei dem jede Speicherlage eine Absorberschicht aufweist, die jeweilige Absorberschicht nach dem Eingeben der Daten ausbleicht und so für nachfolgende Schreib- und Lesevorgänge in den unteren Lagen mehr Energie zur Verfügung stellt. Diese Art von Datenspeicher erfordert für jede Speicherlage eine Absorberschicht mit einem Absorberfarbstoff.

Die DE 199 32 902 A1 offenbart einen optischen Datenspeicher mit einem mehrlagig angeordneten optischen Informationsträger, der in jeder Lage einen zum Speichern von Information eingerichteten Polymerträger und zusätzlich eine Schicht aufweist, die einen Farbstoff enthält und zum Speichern von Information lokal optisch veränderbar ist. Der Oberbegriff des Anspruchs 1 geht von diesem Stand der Technik aus.

Es ist Aufgabe der Erfindung, in einem einfach aufgebauten mehrlagigen optischen Datenspeicher für alle Speicherlagen günstige Schreib- und Lesebedingungen zu schaffen.

Diese Aufgabe wird gelöst durch einen optischen Datenspeicher mit den Merkmalen des Anspruchs 1 und ein Verfahren zum Beschreiben eines derartigen Datenspeichers mit den Merkmalen des Anspruchs 11. Der Anspruch 18 betrifft ein Verfahren zum Auslesen von Information aus einem derartigen Datenspeicher. Vorteilhafte Ausgestaltungen der Erfindung ergeben sich aus den Unteransprüchen.

Der erfindungsgemäße optische Datenspeicher hat eine Anzahl übereinander angeordneter Speicherlagen, von denen jede eine Reflexionsschicht, vorzugsweise eine Metallschicht, aufweist, die in einem vorgegebenen optischen Wellenlängenbereich eine anfängliche Absorption von mindestens 5%, vorzugsweise mindestens 10%, und eine anfängliche Transmission von mindestens 5%, vorzugsweise mindestens 10%, hat und deren Transmission bzw. Reflexion durch thermische Behandlung selektiv veränderbar ist. Wenn im folgenden der Begriff "Metallschicht" benutzt wird, schließt dies die Verwendung einer nichtmetallischen Reflexionsschicht, die ansonsten die anspruchsgemäßen Eigenschaften hat, nicht aus. Die Reflexionsschicht bzw. Metallschicht ist vorzugsweise dünner als 100 nm, insbesondere dünner als 50 nm. Als Metalle eignen sich z.B. Silber, Aluminium, Kupfer, Gold oder Titan; auch Mischungen oder Legierungen sind denkbar.

Dünne Metallfilme (Metallschichten) zeigen in ihren optischen Eigenschaften (neben einer mit steigender Schichtdicke sinkenden Transmission und wachsenden Reflexion) einen Bereich starker Absorption. So können Metallfilme bei bestimmten Schichtdicken eine Absorption von 30% oder mehr erreichen. Die optischen Eigenschaften hängen stark von der Art der Aufbringung der Metallschicht ab (Sputtern, Aufdampfen, etc.). Bei dem erfindungsgemäßen mehrlagigen optischen Datenspeicher werden dünne Metallfilme mit hoher Absorption als kombinierte Reflexions- und Absorptionsschicht verwendet. Dadurch wird ein Datenträger bereitgestellt, bei dem durch eine hohe Reflexion (Verspiegelung) und Absorption einer gegebenen Speicherlage während eines Schreibvorgangs zum Einbringen von Information ein schneller und sicherer Schreibprozess gewährleistet ist.

Bei der Benutzung von Metallfilmen als Absorptionsschicht und als Reflexionsschicht besteht jedoch ein Konflikt, da Metallfilme mit geeignet hoher Absorption (wie zum Einschreiben von Daten erforderlich) in der Regel auch einen relativ hohen Reflexionsgrad (Reflexion) aufweisen, so dass wegen der resultierenden relativ geringen Transmission tieferliegende Speicherlagen von einem Schreib- oder Lesestrahl nicht mit ausreichender Intensität erreicht werden.

Zur Lösung dieses Konflikts wird ausgenutzt, dass sich die Transmission (bzw. die mit der Transmission korrelierende Reflexion) einer jeweiligen Metallschicht durch thermische Behandlung (z.B. durch Bestrahlung mit Licht) selektiv verändern lässt. Durch Zufuhr thermischer Energie können nämlich die optischen Eigenschaften von Metallschichten beeinflusst werden. Der Grund dafür können u.a. eine Änderung der Form und Größe der Metallpartikel und daraus resultierende veränderte Resonanzbedingungen der Plasmonen des Metallfilms sein.

Dieser Effekt wird in dem erfindungsgemäßen Verfahren zum Beschreiben eines optischen Datenspeichers der vorgenannten Art mit Information ausgenutzt. Dabei wird die Information mit einem Schreiblaser durch lokale Veränderung der optischen Eigenschaften in eine jeweilige Speicherlage eingebracht, und zwar vorzugsweise angefangen bei der der Fokussierungsoptik des Schreiblasers am nächsten liegenden Speicherlage und von dort aus von Speicherlage zu Speicherlage fortschreitend. Die Transmission bzw. Reflexion in einer jeweiligen Speicherlage wird durch thermische Behandlung (vorzugsweise durch Bestrahlen mit Laserlicht) eingestellt.

Dies ermöglicht eine Schreibstrategie, welche den mehrlagigen optischen Datenspeicher zuerst auf der der Fokussierungsoptik (z.B. einer Schreiblinse) zugewandten Seite beschreibt und sich dann bis zur letzten Lage durcharbeitet. Zunächst weisen die Reflexionsschichten bzw. Metallschichten aller Speicherlagen eine hohe Absorption und eine hohe Reflexion auf. Somit kann die erste Lage schnell und sicher mit den gewünschten Daten beschrieben werden. Daraufhin kann die erste Lage z.B. ein zweites Mal durchgehend mit geringerer Intensität belichtet werden, was eine thermische Behandlung der zugehörigen Metallschicht bewirkt, so dass die Reflexion dieser Lage auf den Wert eines gewünschten Reflexion-/Lagen-Profils (siehe unten) herabgesetzt wird. Dabei wird gleichzeitig die Absorption der Lage vermindert, wodurch in der nächsten Speicherlage mehr Laserintensität zum Schreiben von Daten zur Verfügung steht. Diese Schreibstrategie gewährleistet also eine ausreichende Intensität des Schreiblasers beim Beschreiben jeder Speicherlage.

Der fertig beschriebene Datenspeicher kann schließlich ein Reflexion-/Lagen-Profil aufweisen, welches für einen lesbaren mehrlagigen optischen Datenspeicher den Optimalfall darstellt. Dabei sind die Transmission bzw. Reflexion der einzelnen Speicherlagen so eingestellt, dass beim Auslesen von Daten die von den einzelnen Speicherlagen reflektierten Lesesignale, die vorzugsweise mit einem Leselaser erzeugt werden, für die einzelnen Speicherlagen maximal mögliche und näherungsweise gleich große Intensität haben. Auch andere Reflexion-/Lagen-Profile sind möglich.

Bei bevorzugten Ausführungsformen der Erfindung weist jede Speicherlage benachbart zu der Reflexionsschicht bzw. Metallschicht eine Polymerschicht auf, deren physikalische (vorzugsweise optische) Eigenschaften lokal durch Erwärmung veränderbar sind. Vorzugsweise ist die Polymerschicht verstreckt, insbesondere biaxial verstreckt, und kann z.B. Polypropylen, Polyvinylchlorid, Polyethylenterephthalat, Polyethylennaphthalt, Polycarbonat, Polyamid, Polystyrol, Polymethylenmethacrylat, Polymethylpenten, Polyimid und/oder Polyalkylmethacrylat enthalten. In derartigen Polymerschichten wird bei der Herstellung, insbesondere der Verstreckung, Energie gespeichert, die bei lokaler Erwärmung zu einer lokalen Umstrukturierung führt, wodurch sich z.B. lokal die Brechzahl, Dichte und die Reflektivität ändern. Dies kann zum Speichern von Information genutzt werden. Die typische Größe eines Speicherorts für ein Bit beträgt etwa 1 µm² oder (insbesondere bei kurzen Wellenlängen eines Schreib- bzw. Leselasers) auch weniger. Bei diesen Ausführungsformen kann die Absorption in der einer gegebenen Speicherlage zugeordneten Reflexionsschicht bzw. Metallschicht zu Erwärmung der Polymerschicht genutzt werden, wobei die Wärme von der Metallschicht auf die benachbarte Polymerschicht übertragen wird und dort lokal zu einer Änderung der optischen Eigenschaften führt. Grundsätzlich ist es aber auch denkbar, einen Absorberfarbstoff (z.B. in der Polymerschicht) vorzusehen (siehe z.B. WO 02/103689 A1). Ferner können die Speicherlagen auch noch andere Schichten enthalten, z.B. eine Adhäsionsschicht.

Bei Verwendung einer derartigen Polymerschicht ist die eingegebene Information in der Polymerschicht gespeichert. Da die Transmission bzw. Reflexion der Metallschicht durch thermische Behandlung selektiv veränderbar ist, ist es aber auch möglich, die Metallschicht selbst als Speicherort zu nutzen.

Der erfindungsgemäße optischer Datenspeicher kann in verschiedenartigen Grundformen vorliegen, z.B. als Scheibe oder als Zylinder (mit einer konzentrischen Anordnung der Speicherlagen). Eine weitere Möglichkeit ist eine zylinderartige Grundform mit spiralförmiger Anordnung der Speicherlagen (siehe z.B. WO 00/17864 A1); eine derartige Grundform entsteht durch Aufwickeln einer Speicherlage (oder auch mehrerer übereinander angeodneter Speicherlagen) und Fixieren im aufgewickelten Zustand.

Eine Schreibstrategie, bei der die Transmission bzw. Reflexion in der zuletzt beschriebenen Speicherlage eingestellt wird, indem die gesamte Speicherlage nach dem Einbringen der Information einer thermischen Behandlung unterzogen wird, wurde bereits vorgestellt.

Bei einem alternativen Verfahren werden die Transmissions- bzw. Reflexionseigenschaften in der zuletzt beschriebenen Speicherlage eingestellt, indem unmittelbar nach dem Schreiben von Daten der gerade beschriebene Bereich der Speicherlage mit einem Laserstrahl bestrahlt wird. Dies vermeidet den relativ langwierigen Behandlungsvorgang bei der vorgenannten Schreibstrategie, der jedesmal erfolgen muss, wenn eine Speicherlage vollständig beschrieben ist.

Noch schneller arbeitet ein Verfahren, bei dem die Transmission bzw. Reflexion in der zuletzt beschriebenen Speicherlage eingestellt wird, indem während des Schreibens von Daten die Zwischenräume zwischen den Datenstrukturen mit einem Laserstrahl bestrahlt werden, vorzugsweise mit dem Schreiblaser. Das Bestrahlen der Zwischenräume erfolgt in der Regel mit geringerer Intensität als das Bestrahlen zum Erzeugen der Datenstrukturen selbst. Da aber die Position der Datenstrukturen und der Zwischenräume schon vor dem Ansteuern des Schreibstrahls bekannt ist, lässt sich mit dieser Strategie ein zusätzlicher Arbeitsgang zum Einstellen der Transmission bzw. Reflexion ganz einsparen. Beim Erzeugen der Datenstrukturen ändert die Metallschicht in der Regel ihr Reflexionsverhalten in der gewünschten Richtung, so dass bei dieser Strategie nicht nur die Transmission bzw. Reflexion der Zwischenräume günstig eingestellt wird. Die erwähnten Datenstrukturen müssen nicht in die Metallschicht eingebracht werden, sondern können auch in einer benachbarten Polymerschicht entstehen (siehe oben).

Um den Schreibprozess zu verbessern, kann es vorteilhaft sein, wenn der Schreiblaser in unterschiedlichen Wellenlängenbereichen arbeitet und/oder mehrere Schreiblaser vorgesehen sind, die in unterschiedlichen Wellenlängenbereichen arbeiten, wobei einer vorgegebenen Speicherlage ein vorgegebener Wellenlängenbereich zugeordnet wird.

Entsprechend kann es zum Auslesen von Information aus einem optischen Datenspeicher, wenn zum Erzeugen von Lesesignalen der Strahl eines Leselasers an einer anfokussierten Speicherlage reflektiert wird und die Lesesignale erfasst werden, vorteilhaft sein, wenn der Leselaser in unterschiedlichen Wellenlängenbereichen arbeitet und/oder mehrere Leselaser vorgesehen sind, die in unterschiedlichen Wellenlängenbereichen arbeiten, wobei einer vorgegebenen Speicherlage ein vorgegebener Wellenlängenbereich zugeordnet wird.

Die Erfindung stellt also einen beschreibbaren mehrlagigen optischen Datenträger zur Verfügung, der in jeder Speicherlage eine funktionale Schicht (oder auch mehrere) hat, die für Absorption und Reflexion von Schreiblaserlicht während des Schreibvorgangs und für Reflexion während des Lesevorgangs sorgt. Die Anforderungen an die optischen Eigenschaften der funktionalen Schicht können beim Schreib- und beim Lesevorgang stark voneinander abweichen. Daher bietet die Erfindung die Möglichkeit, durch Verwendung geeigneter funktionaler Schichten (insbesondere Metallschichten) und der entsprechenden Schreibstrategie optimale Schreib- und Lesebedingungen zu schaffen. Beim Schreibvorgang stehen stark absorbierende und reflektierende Schichten zur Verfügung, welche einen schnellen und sicheren Schreibprozess gewährleisten, während beim Lesevorgang schwach absorbierende und hinsichtlich der Lagenanzahl optimal reflektierende Schichten schnelle Zugriffszeiten und eine optimale Signalausbeute ermöglichen.

Im folgenden wird die Erfindung anhand von Beispielen weiter erläutert. Die Zeichnungen zeigen in
- Figur 1: eine graphische Darstellung der optischen Eigenschaf- ten (Transmission, Reflexion, Absorption) dünner Sil- berfilme als Funktion der Schichtdicke (Wellenlänge 633 nm),
- Figur 2: eine graphische Darstellung der Transmisionsspektren einer Silberschicht (mittlere Dicke etwa 10 nm) als Funktion der Wellenlänge nach thermischer Behandlung durch pulsartige Bestrahlung mit Laserlicht für ver- schiedene Pulsdauern,
- Figur 3: eine graphische Darstellung der Änderung der Trans- mission von Licht (für drei verschiedene Wellenlängen) durch eine Silberschicht (mittlere Dicke etwa 10 nm) nach pulsartiger Bestrahlung mit Laserlicht als Funk- tion der Pulsdauer und
- Figur 4: eine schematische Veranschaulichung einer Schreibstra- tegie zum Beschreiben eines erfindungsgemäßen opti- schen Datenspeichers.

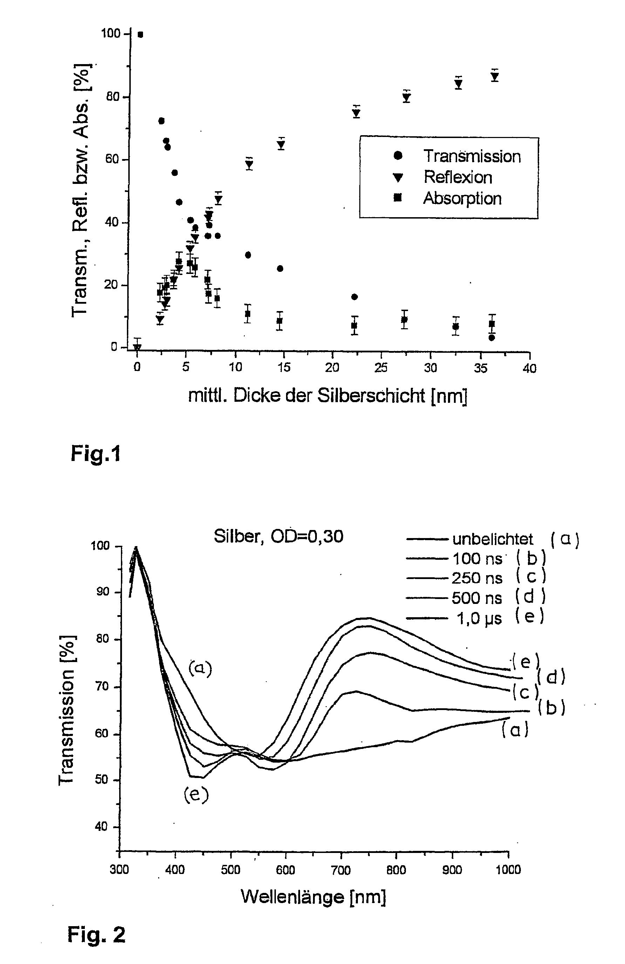

Untersucht man dünne Metallfilme hinsichtlich ihrer optischen Eigenschaften, so zeigen sie (neben einer mit wachsender Schichtdicke sinkenden Transmission und wachsenden Reflexion) einen Bereich starker Absorption. So können Metallfilme bei bestimmten Schichtdicken eine Absorption von 30% oder mehr erreichen. Die optischen Eigenschaften hängen stark von der Art der Aufbringung der Metallschicht ab (Sputtern, Aufdampfen, etc.). In Figur 1 ist der Verlauf der optischen Eigenschaften von dünnen Silberfilmen in Abhängigkeit von der Schichtdicke dargestellt.

Metallfilme mit hoher Absorption können als kombinierte Reflexions- und Absorptionsschicht für mehrlagige optische Datenspeicher verwendet werden. Experimente haben gezeigt, dass sich mit Pulsdauern von etwa 100 ns bei einer Laserleistung von etwa 12 mW auf einer Fläche von etwa 1 µm² bereits deutlich sichtbare Belichtungseffekte erzielen lassen. Schnelle Schreibzeiten sind folglich gewährleistet.

Eine genauere Untersuchung der Belichtungseffekte lässt erkennen, dass die Zufuhr thermischer Energie durch den Laser die optischen Eigenschaften von Metallschichten verändert. Der Grund dafür können u.a. eine Änderung der Form und Größe der Metallpartikel und daraus resultierende veränderte Resonanzbedingungen der Plasmonen des Metallfilms sein. In Figur 2 sind die Spektren unterschiedlich stark belichteter Silberschichten im sichtbaren und nahinfraroten Wellenlängenbereich dargestellt.

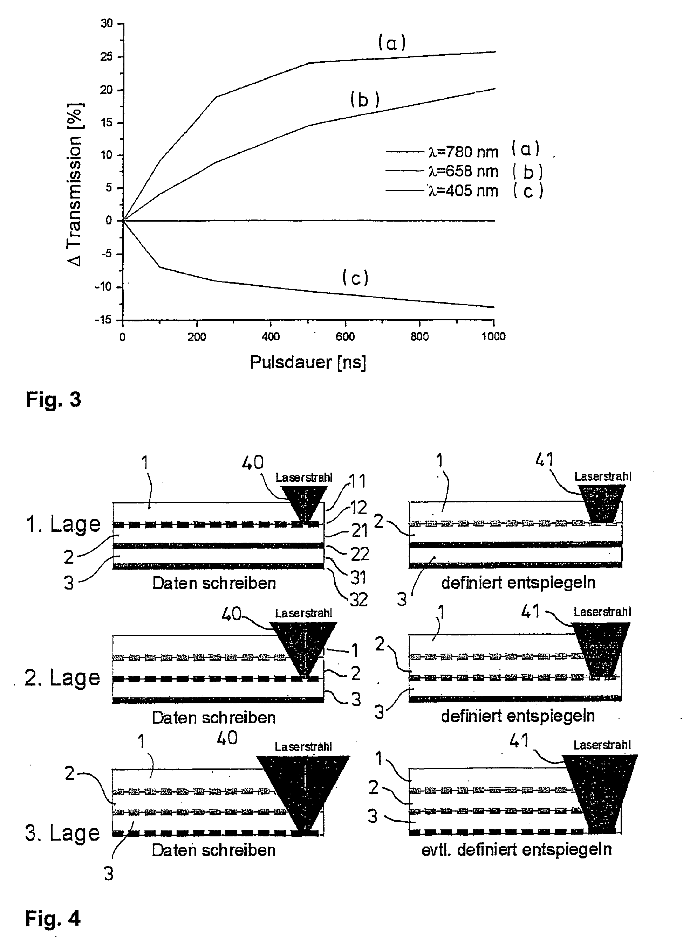

Durch verschieden starke Belichtung mit einem Laser ist folglich eine gezielte Veränderung der Transmission dünner Metallfilme möglich. Bei drei verschiedenen Wellenlängen betrachtet, ergibt sich für die exemplarische Silberschicht die in Figur 3 dargestellte Änderung der Transmission. Während die Transmission für einen Wellenlängenbereich steigt, kann sie für andere Bereiche fallen.

Für einen mehrlagigen Speicher lässt sich ein optimales Reflexion-/Lagen-Profil ermitteln, welches ermöglicht, dass beim Auslesen die reflektierten Signale aller Lagen gleich stark und maximal sind. Für ein fünflagiges System mit idealen (absorptionsfreien) Reflexionsschichten sieht dieses Profil folgendermaßen aus:
- 1. Lage: 12% Reflexion
- 2. Lage: 16% Reflexion
- 3. Lage: 23% Reflexion
- 4. Lage: 38% Reflexion
- 5. Lage: 100% Reflexion

Dieses Profil ergibt ein Reflexionssignal von jeder Schicht von etwa 12%.

Das Reflexion-/Lagen-Profil ist abhängig von der Anzahl der Lagen sowie der Absorption der einzelnen Lagen und kann daher unterschiedlich aussehen. Ferner kann es erwünscht sein, nicht aus jeder Lage gleich starke Signale zu erhalten, was ebenfalls zu einem veränderten Profil führt.

Grundsächlich lassen sich gewünschte Reflexionsgrade durch Metallisierung einer Oberfläche realisieren, da sich über die Schichtdicke von Metallfilmen der Reflexionsgrad sehr genau einstellen lässt.

Es besteht jedoch ein Konflikt zwischen der Benutzung von Metallfilmen als Absorptionsschicht und als Reflexionsschicht, da Metallfilme mit geeignet hoher Absorption nicht unbedingt die (eher niedrigen) Reflexionsgrade aufweisen, welche dem optimalen Reflexion-/Lagen-Profil eines mehrlagigen optischen Datenspeichers entsprechen.

Als Lösung dieses Konflikts kann eine Schreibstrategie verwendet werden, welche den mehrlagigen optischen Datenspeicher auf der der Schreiblinse eines Schreiblasers zugewandten Seite zuerst beschreibt und sich dann bis zur letzten Lage durcharbeitet. Zunächst weisen alle Lagen eine relativ hohe Absorption und eine relativ hohe Reflexion auf. Somit kann die erste Lage schnell und sicher mit Daten beschrieben werden. Daraufhin kann die erste Lage ein zweites Mal durchgehend mit geringerer Intensität belichtet werden, so dass die Reflexion dieser Lage auf den gewünschten Wert des Reflexion-/Lagen-Profils herabgesetzt wird. Dabei wird gleichzeitig die Absorption der Lage herabgesetzt, wodurch in der nächsten Lage mehr Laserintensität zum Schreiben der Daten zur Verfügung steht.

Alle folgenden Lagen des mehrlagigen optischen Datenspeichers können nun auf ähnliche Weise beschrieben und definiert "entspiegelt" werden, so dass am Ende ein komplett beschriebener Datenträger vorliegt, welcher das gewünschte Reflexion-/Lagen-Profil aufweist. In der Figur 4 ist noch einmal die Schreibstrategie für exemplarische drei Lagen dargestellt. Die Lagen werden nacheinander beschrieben und definiert entspiegelt.

Die Figur 4 zeigt in schematischer Weise einen optischen Datenspeicher mit einer ersten Speicherlage 1, einer zweiten Speicherlage 2 und einer dritten Speicherlage 3. Im Ausführungsbeispiel enthält die erste Speicherlage 1 eine Polymerschicht 11, in die die Datenstrukturen der zu speichernden Information eingebracht werden, sowie eine Metallschicht 12. Entsprechend haben die zweite Speicherlage 2 und die dritte Speicherlage 3 eine Polymerschicht 21 und eine Metallschicht 22 bzw. eine Polymerschicht 31 und eine Metallschicht 32. Die Polymerschichten 11, 21 und 31 bestehen im Ausführungsbeispiel jeweils aus biaxial verstrecktem Polypropylen von 35 µm Dicke und die Metallschichten jeweils aus Silber von etwa 10 nm Dicke.

Zunächst werden Daten in die erste Speicherlage 1 eingebracht (Figur 4, oben links). Dazu dient ein auf die Metallschicht 11 fokussierter Laserstrahl (Schreibstrahl 40 eines Schreiblasers), der in der Metallschicht 11 absorbiert wird. Die Metallschicht 11 hat zu diesem Zeitpunkt noch relativ hohe Absorption (und Reflexion), so dass ein relativ hoher Anteil des Schreibstrahls 40 in der Metallschicht 11 absorbiert wird und nur ein relativ geringer Anteil zu den tieferen Speicherlagen 2 und 3 gelangt. Die durch die Absorption erzeugte Wärme wird auf die Polymerschicht 11 übertragen, wo sie eine lokale Änderung der Brechzahl bewirkt (siehe oben), die die gespeicherten Daten repräsentiert (Datenstruktur).

Nachdem die erste Speicherlage 1 mit Daten versehen ist, wird der Schreibstrahl 40 leicht defokussiert und erwärmt als Bestrahlungsstrahl 41 die Metallschicht 11 großflächig, indem er die Metallschicht 11 abfährt (Figur 4, oben rechts). Dadurch werden die Reflexion und die Absorption in der Metallschicht 11 erniedrigt, so dass danach für die zweite Speicherlage 2 und die dritte Speicherlage 3 mehr Intensität des Schreibstrahls (oder eines Lesestrahls zum Auslesen von Daten) zur Verfügung stehen.

Im mittleren und im unteren Bereich der Figur 4 sind die entsprechenden Vorgänge für die zweite Speicherlage 2 und die dritte Speicherlage 3 dargestellt. Wenn die Metallschicht 31 zur untersten Speicherlage des Datenspeichers gehört, kann deren Reflexion bereits bei der Herstellung des Datenspeichers so eingestellt werden, dass sich eine spätere Einstellung durch den Bestrahlungsstrahl erübrigt.

Es ist auch möglich, Information direkt in eine Metallschicht einzuschreiben, ohne dabei eine Polymerschicht als Träger für die Datenstrukturen zu benutzen. In diesem Fall kann eine Polymerschicht aber als Abstandshalter zwischen den Metallschichten benachbarter Speicherlagen dienen.

So kann zum Beispiel eine Datenstruktur mit einem Schreiblaser direkt in eine Metallschicht belichtet werden, so dass sich diese in Reflexion auslesen lässt. Anschließend kann der beschriebene Bereich mit leicht defokussiertem Laserstrahl teilentspiegelt werden. Beim Auslesen in Reflexion zeigt sich eine Abschwächung der Reflexion, aber dafür steht für nachfolgende Speicherlagen eine höhere Intensität des Schreibstrahls bzw. Lesestrahls zur Verfügung.

Die beschriebene Schreibstrategie ist nur eine von mehreren Möglichkeiten. Bei Varianten kann die Entspiegelung durch einen zweiten leicht versetzten Laserspot unmittelbar nach dem Schreiben der Daten erfolgen und erfordert somit keine zusätzliche Schreibzeit. Zum anderen kann man, anstatt die Zwischenräume zwischen den Datenstrukturen während des Schreibprozesses nicht zu beschreiben, sie mit schwächeren Pulsen beschreiben und so einen zusätzlichen Entspiegelungsvorgang völlig vermeiden.

Die Entspiegelung der Schichten beruht auf einem thermischen Effekt. Jede andere Form der Zugabe von thermischer Energie kann ebenfalls als Entspiegelungsmaßnahme benutzt werden.

Wie weiter oben beschrieben, kann in bestimmten Wellenlängenbereichen die Reflexion der Metallschicht einer Speicherlage durch thermische Behandlung erhöht werden. Es kann daher sinnvoll sein, statt die Metallschichten der Speicherlagen nach dem Einschreiben von Daten zu entspiegeln, sie (oder zumindest eine oder mehrere) definiert zu verspiegeln.

Es kann sowohl beim Schreib- als auch beim Leseprozess vorteilhaft sein, in verschiedenen Wellenlängenbereichen zu arbeiten (die vorzugsweise von mehr als einem Laser erzeugt werden) und so auszunutzen, dass die funktionalen Schichten (Metallschichten) je nach Wellenlänge stärker oder schwächer reflektieren. Als Beispiel kann man beim Leseprozess die oberen Lagen mit einer Wellenlänge von 405 nm lesen, da sie in diesem Bereich nach dem Entspiegeln stärker reflektieren, während man die unteren Schichten mit einer Wellenlänge von 658 nm lesen kann, da sie in diesem Bereich von den oberen Schichten weniger abgeschwächt werden.

Zusätzlich kann in Betracht gezogen werden, die funktionalen Schichten stufenweise zu ent- bzw. verspiegeln, wenn das für die Schreibstrategie oder Signalausbeute von Vorteil ist.

## Patentansprüche

1. Verfahren zum Beschreiben eines optischen Datenspeichers mit Information,
- wobei der optische Datenspeicher eine Anzahl übereinander angeordneter Speicherlagen (1, 2, 3) hat, von denen jede eine Reflexionsschicht, vorzugsweise eine Metallschicht (12, 22, 32), aufweist, die in einem vorgegebenen optischen Wellenlängenbereich eine anfängliche Absorption von mindestens 5%, vorzugsweise mindestens 10%, und eine anfängliche Transmission von mindestens 5%, vorzugsweise mindestens 10%, hat und deren Transmission bzw. Reflexion durch thermische Behandlung selektiv veränderbar ist, und
- wobei in dem Verfahren die Information mit einem Schreiblaser (40) durch lokale Veränderung der optischen Eigenschaften in eine jeweilige Speicherlage (1, 2, 3) eingebracht wird, und zwar vorzugsweise angefangen bei der der Fokussierungsoptik des Schreiblasers (40) am nächsten liegenden Speicherlage (1) und von dort aus von Speicherlage (2) zu Speicherlage (3) fortschreitend, wobei die Transmission bzw. Reflexion in einer jeweiligen Speicherlage (1, 2, 3) durch thermische Behandlung eingestellt wird.

2. Verfahren nach Anspruch 1, **dadurch gekennzeichnet, dass** die thermische Behandlung durch Bestrahlen mit Laserlicht (41) durchgeführt wird.

3. Verfahren nach Anspruch 1 oder 2, **dadurch gekennzeichnet, dass** die Transmission bzw. Reflexion in der zuletzt beschriebenen Speicherlage (1, 2, 3) eingestellt wird, indem die gesamte Speicherlage nach dem Einbringen der Information einer thermischen Behandlung unterzogen wird.

4. Verfahren nach Anspruch 2, **dadurch gekennzeichnet, dass** die Transmission bzw. Reflexion in der zuletzt beschriebenen Speicherlage eingestellt wird, indem unmittelbar nach dem Schreiben von Daten der gerade beschriebene Bereich der Speicherlage mit einem Laserstrahl bestrahlt wird.

5. Verfahren nach Anspruch 2, **dadurch gekennzeichnet, dass** die Transmission bzw. Reflexion in der zuletzt beschriebenen Speicherlage eingestellt wird, indem während des Schreibens von Daten die Zwischenräume zwischen den Datenstrukturen mit einem Laserstrahl bestrahlt werden, vorzugsweise mit dem Schreiblaser.

6. Verfahren nach einem der Ansprüche 1 bis 5, **dadurch gekennzeichnet, dass** die Transmission bzw. Reflexion der einzelnen Speicherlagen (1, 2, 3) so eingestellt wird, dass beim Auslesen von Daten die von den einzelnen Speicherlagen (1, 2, 3) reflektierten Lesesignale, die vorzugsweise mit einem Leselaser erzeugt werden, für die einzelnen Speicherlagen (1, 2, 3) maximal mögliche und näherungsweise gleich große Intensität haben.

7. Verfahren nach einem der Ansprüche 1 bis 6, **dadurch gekennzeichnet, dass** der Schreiblaser in unterschiedlichen Wellenlängenbereichen arbeitet und/oder mehrere Schreiblaser vorgesehen sind, die in unterschiedlichen Wellenlängenbereichen arbeiten, wobei einer vorgegebenen Speicherlage ein vorgegebener Wellenlängenbereich zugeordnet wird.

8. Verfahren zum Auslesen von Information aus einem optischen Datenspeicher
- wobei der optische Datenspeicher eine Anzahl übereinander angeordneter Speicherlagen (1, 2, 3) hat, von denen jede eine Reflexionsschicht, vorzugsweise eine Metallschicht (12, 22, 32), aufweist, die in einem vorgegebenen optischen Wellenlängenbereich eine anfängliche Absorption von mindestens 5%, vorzugsweise mindestens 10%, und eine anfängliche Transmission von mindestens 5%, vorzugsweise mindestens 10%, hat und deren Transmission bzw. Reflexion durch thermische Behandlung selektiv veränderbar ist, und
- wobei in dem Verfahren zum Erzeugen von Lesesignalen der Strahl eines Leselasers an einer anfokussierten Speicherlage (1, 2, 3) reflektiert wird und die Lesesignale erfasst werden.

9. Verfahren nach Anspruch 8, **dadurch gekennzeichnet, dass** der Leselaser in unterschiedlichen Wellenlängenbereichen arbeitet und/oder mehrere Leselaser vorgesehen sind, die in unterschiedlichen Wellenlängenbereichen arbeiten, wobei einer vorgegebenen Speicherlage ein vorgegebener Wellenlängenbereich zugeordnet wird.

## Claims

1. Method for writing information to an optical data storage device,
- the optical data storage device having a number of storage strata (1, 2, 3) arranged one above the other, each of which has a reflection layer, preferably a metal layer (12, 22, 32), which, in a predetermined optical wavelength range, has an initial absorption of at least 5%, preferably at least 10%, and an initial transmission of at least 5%, preferably at least 10%, and the transmission or reflection of which can be varied selectively by thermal treatment, and
- in the method, the information being introduced into a respective storage stratum (1, 2, 3) by means of a writing laser (40) by local variation of the optical properties, to be precise preferably initially at the storage stratum (1) lying closest to the focusing optical system of the writing laser (40) and progressing from there from storage stratum (2) to storage stratum (3), the transmission or reflection being set in a respective storage stratum (1, 2, 3) by thermal treatment.

2. Method according to Claim 1, **characterized in that** the thermal treatment is carried out by irradiation with laser light (41).

3. Method according to Claim 1 or 2, **characterized in that** the transmission or reflection is set in the storage stratum (1, 2, 3) written to last by subjecting the entire storage stratum to a thermal treatment after the introduction of the information.

4. Method according to Claim 2, **characterized in that** the transmission or reflection is set in the storage stratum written to last by that region of the storage stratum that has just been written to being irradiated with a laser beam immediately after the writing of data.

5. Method according to Claim 2, **characterized in that** the transmission or reflection is set in the storage stratum written to last by the interspaces between the data structures being irradiated with a laser beam during the writing of data, preferably by means of the writing laser.

6. Method according to one of Claims 1 to 5, **characterized in that** the transmission or reflection of the individual storage strata (1, 2, 3) is set such that, when reading out data, the read signals which are reflected from the individual storage strata (1, 2, 3), and are preferably generated by means of a reading laser, have a maximum possible intensity that is approximately of identical magnitude for the individual storage strata (1, 2, 3).

7. Method according to one of Claims 1 to 6, **characterized in that** the writing laser operates in different wavelength ranges and/or a plurality of writing lasers are provided which operate in different wavelength ranges, a predetermined wavelength range being assigned to a predetermined storage stratum.

8. Method for reading out information from an optical data storage device,
- the optical data storage device having a number of storage strata (1, 2, 3) arranged one above the other, each of which has a reflection layer, preferably a metal layer (12, 22, 32), which, in a predetermined optical wavelength range, has an initial absorption of at least 5%, preferably at least 10%, and an initial transmission of at least 5%, preferably at least 10%, and the transmission or reflection of which can be varied selectively by thermal treatment, and
- in the method, in order to generate read signals, the beam of a reading laser being reflected at a storage stratum (1, 2, 3) onto which it is focused and the read signals being detected.

9. Method according to Claim 8, **characterized in that** the reading laser operates in different wavelength ranges and/or a plurality of reading lasers are provided which operate in different wavelength ranges, a predetermined wavelength range being assigned to a predetermined storage stratum.

## Revendications

1. Procédé pour l'inscription d'informations dans une mémoire optique de données,
- la mémoire optique de données ayant un certain nombre de niveaux de mémoire superposées (1, 2, 3), chacun d'entre eux comportant une couche de réflexion, de préférence une couche métallique (12, 22, 32) qui dans une plage définie de longueurs d'ondes optiques, a une absorption initiale d'au moins 5%, de préférence au moins 10%, et une transmission initiale d'au moins 5%, de préférence au moins 10%, et dont la transmission respectivement la réflexion peut être modifiée sélectivement par un traitement thermique, et
- dans le procédé, l'information étant enregistrée avec un laser d'écriture (40) par une modification locale des propriétés optiques dans un niveau de mémoire (1, 2, 3) correspondant, et en l'occurrence de préférence en commençant par le niveau de mémoire (1) le plus proche de l'optique de focalisation du laser d'écriture (40) et progressant à partir de là, du niveau de mémoire (2) au niveau de mémoire (3), la transmission respectivement la réflexion étant réglée par traitement thermique dans un niveau de mémoire (1, 2, 3) correspondant.

2. Procédé selon la revendication 1, **caractérisé en ce que** le traitement thermique est effectué par irradiation avec de la lumière laser (41).

3. Procédé selon la revendication 1 ou 2, **caractérisé en ce que** dans le niveau de mémoire (1, 2, 3) inscrit en dernier, la transmission respectivement la réflexion est réglée en soumettant la totalité du niveau de mémoire à un traitement thermique après y avoir enregistré l'information.

4. Procédé selon la revendication 2, **caractérisé en ce que** dans le niveau de mémoire inscrit en dernier, la transmission respectivement la réflexion est réglée en irradiant au moyen d'un rayon laser la zone du niveau de mémoire qu'on vient d'inscrire immédiatement après y avoir écrit des données.

5. Procédé selon la revendication 2, **caractérisé en ce que** dans le niveau de mémoire inscrit en dernier, la transmission respectivement la réflexion est réglée en irradiant les espaces entre les structures de données pendant l'écriture de données au moyen d'un rayon laser, de préférence avec le laser d'écriture.

6. Procédé selon une des revendications 1 à 5, **caractérisé en ce que** la transmission respectivement la réflexion des niveaux de mémoire (1, 2, 3) individuels est réglée de telle sorte que lors de la lecture de données, les signaux de lecture réfléchis par les niveaux de mémoire (1, 2, 3) individuels, qui sont de préférence générés avec un laser de lecture, aient une intensité maximale pour les niveaux de mémoire (1, 2, 3) individuels et approximativement la même amplitude.

7. Procédé selon une des revendications 1 à 6, **caractérisé en ce que** le laser d'écriture fonctionne dans différentes plages de longueurs d'ondes et/ou qu'on ait prévu plusieurs lasers d'écriture fonctionnant dans différentes plages de longueurs d'ondes, une plage donnée de longueurs d'ondes étant attribuée à un niveau donné de mémoire.

8. Procédé pour la lecture d'informations à partir d'une mémoire optique de données,
- la mémoire optique de données ayant un certain nombre de niveaux de mémoire superposées (1, 2, 3), chacun d'entre eux comportant une couche de réflexion, de préférence une couche métallique (12, 22, 32) qui dans une plage définie de longueurs d'ondes optiques, a une absorption initiale d'au moins 5%, de préférence au moins 10%, et une transmission initiale d'au moins 5%, de préférence au moins 10%, et dont la transmission respectivement la réflexion peut être modifiée sélectivement par un traitement thermique, et
- dans le procédé pour la génération de signaux de lecture, le faisceau d'un laser de lecture se réfléchissant sur un niveau de mémoire (1, 2, 3) sur lequel il est focalisé et les signaux de lecture étant saisis.

9. Procédé selon la revendication 8, **caractérisé en ce que** le laser de lecture fonctionne dans différentes plages de longueurs d'ondes et/ou qu'on prévoit plusieurs lasers de lecture fonctionnant dans différentes plages de longueurs d'ondes, une plage donnée de longueurs d'ondes étant attribuée à un niveau donné de mémoire.
